# EUROPEAN PATENT APPLICATION

(11) **EP 3 772 609 A1**
(43) Date of publication of application: **10.02.2021**
(21) Application number: 19190035.6
(22) Date of filing: 05.08.2019
(51) Int. Cl.: F21V 7/00, F21V 17/10, G02B 27/09, F21V 17/00, F21Y 115/10, F21Y 105/10

(54) **REFLECTOR SYSTEM FOR REDUCING THE UNIFIED GLARE RATING FROM LUMINAIRES WITH LED TECHNOLOGY**

(71) Applicant: Palomares Mateu, Bernardo, 03700 Denia (ES)
(72) Inventor: PALOMARES MATEU, Bernardo, E-03700 DENIA (ES)
(74) Representative: De Pablos Riba, Juan Ramon

(57) **Abstract**

The present invention discloses a reflector system which allows to reduce the Unified Glare Rating (UGR) from a luminaire, since it may be suitably and quickly installed on any distribution of LED devices, in order to reduce the opening angle of the illuminating beam before it strikes the diffuser, the system comprising at least a reflector (10), wherein said reflector (10) has a certain opening angle and variable length; a base (20) that may be a single piece attached to the reflector (10) or an independent piece, wherein each reflector (10) is fitted and clamped; and hooking and clamping means (30) that allow each reflector (10) to be inserted into the base (20).

## Description

### OBJECT OF THE INVENTION

The object of the present invention discloses a reflector system comprising at least a reflector that may be arranged individually or they may form an array to be suitably and quickly installed on any distribution of LED devices, in order to reduce the opening angle of the illuminating beam before it strikes the diffuser, therefore reducing the Unified Glare Rating (UGR) from the luminaire.

### BACKGROUND OF THE INVENTION

The opening angle of the light beam emitted by a lamp may be defined as the angular amplitude of the light beam, wherein most of the lamp lighting will be concentrated. The amount of illumination onto a surface (whose unit of measurement is the lux) caused by a luminaire not only depends on it emitting a greater or lesser number of lumens (luminous flux) but also on the opening angle of its beam, that is, on how much the emitted light beam is concentrated.

Furthermore, the illuminance incident on a plane is directly proportional to the luminous flux, or the amount of lumens, and inversely proportional to the solid angle covered by the light beam emitted by the lamp or luminaire. Therefore, the greater the amount of lumens of a lamp, the greater sense of illuminationis obtained in a specific space, but the greater the opening angle, even with the same amount of lumens, and in spite of reducing the luminance (amount of lux), the greater the sense of discomfort will be for the users in that specific space, that is, the level of direct glare is greater.

Given this situation, and since in many cases users may wish or need a higher or lower amount of illumination, the opening angle is selected in order to concentrate the illumination as much as possible in the space the user wants to illuminate with the luminaire, or a combination of them, so that it might not result in a discomfort caused by direct glare for the users being in the room illuminated by this luminaire. It is therefore useful to have an accessory as the one that constitutes the object of this invention, as it allows to reduce the Unified Glare Rating (UGR) of the luminaire without requiring the replacement of the type of lamp, the installation of a different screen to the lamp or the replacement of the light source with a different one having a different opening angle, and without modifying the aspect or the outer appearance of the lamp, what has been necessary so far, as the lamps currently present on the market comprise fixed and compact structures that do not allow to easily modify said angle once they are manufactured.

The US patent application US20140168993 discloses a lighting device comprising: a diffusing unit to spread and radiate incident light of a light source; and a condensing unit installed on a surface of light radiation of the diffusion unit, which comprises a micro-lenses array that has a specific incident depending on the light emission area of the illumination device and on the total luminous flux of the illumination device. Therefore, the illuminationdevice may reduce the emitted luminous flow at an angle of 65-90 degrees, thus fulfilling the conditions of the Unified Glare Rating (UGR).

The US patent US 9759408 discloses an illumination device capable of reducing the Unified Glare Rating (UGR) from an illuminating member, the efficiency of the reflection of light that is significantly projected towards the left and the right between the light applied to the air gap through the diffusing plate is increased by using the adhesive material pattern layer of the peripherysurrounding an air gap, and, at the same time, the Unified Glare Rating may be reduced when removing the pattern with a specific structure and increasing the process efficiency. The illuminating device comprises: a printed circuit board with a light source; a frame portion formed around one region where the light source is arranged; and an illuminating member, wherein the illuminating member comprises a diffusing plate, an optical plate on the diffusing plate, an adhesive layer and an air gap between the diffusing plate and the optical plate; wherein the adhesive layer is arranged on a diffusing plate edge; wherein the frame portion includes a first frame that holds the printed circuit board, and a second frame connected to the first frame, and that also holds an insertion part; wherein a part of the illuminating member that has the adhesive layer is inserted in the insertion part, wherein the adhesive layer comes into direct contact with the diffusing plate and the optical plate, wherein the optical plate includes a plurality of micro-lenses patterns, and a space of each of the micro-lenses patterns is within a range of 0.1-0.25, defining the sag as a relationship between the height of the corresponding micro-lenses pattern and a diameter of the same micro-lenses pattern, and a fill factor of each of the micro-lenses patterns. The micro-lenses pattern is within a range of 0.5-0.82, wherein the fill factor is defined as a proportion of an area occupied by the corresponding micro-lenses pattern to a total area of a surface of the optical plate; and wherein the adhesive layer has a width greater than the diameter of each of the micro-lenses patterns.

The object of the present invention centres on the use of a reflector or reflectors that may be arranged individually or they may form an array in order to be suitably and quickly installed on any distribution of LED devices, in order to reduce the opening angle of the illuminating beam before it strikes the diffuser.

Moreover, as a result of the light beam passing through the diffuser at an angle closest to the perpendicular to its plane, this light beam suffers less diffraction when passing through the diffuser material, thus obtaining a greater coincidence of the spectrum of the light emitted by the source, with the light spectrum emitted by the luminaire. That is, the standard deviation colour matching is also improved.

Therefore, the ultimate object of the present invention is to provide the market an innovative device, which is easy to install and cost-effective, in order to allow for the reduction of the Unified Glare Rating (UGR), in addition to all the aforementioned secondary benefits, even in the case when the luminaire is already installed, so that the UGR is reduced at will.

### DESCRIPTION OF DRAWINGS

In order to complement the description that is being made and to facilitate a better understanding of the invention features, according to a preferred example of the practical embodiment thereof, a set of drawings with an illustrative and non limiting character accompanies said description as an integral part of which, wherein:
Figure 1 shows an individual perspective view of the reflector (10) of the invention with its base (20).
Figure 2A shows a view of the internal arrangement of the reflector (10) showing a wide opening angle.
Figure 2B shows a view of the internal arrangement of the reflector (10) showing the variation of the opening angle.
Figure 3 shows a perspective view of a strip with a plurality of reflectors (10).
Figure 4 shows the strip-shaped base (20) wherein the clamping elements (30) may be seen.
Figure 5 shows the square-shaped base (20) wherein a plurality of reflectors (10) may be seen.

### DESCRIPTION OF THE INVENTION

The present invention discloses a reflector system comprising at least a reflector that presents the novelty of reducing the Unified Glare Rating (UGR) of any LED luminaire by reducing the light beam angle emitted by the light source, or a combination of them, before it reaches the lamp diffuser. To that end, the invention has been designed so that it allows the glare to be reduced based on the needs, or user preference in each case, without modifying the aspect, shape or outer dimensions of the lamp.

The reflector, or the combination of them, is designed so that they may be simply and easily installed on the printed circuit boards where the LEDs are welded, or on the LEDs themselves, which are installed inside a luminaire. This reduces the opening degree of the light beam caused by the light source, before it reaches the diffuser of the luminaire itself, thus reducing the said opening angle of the beam projected through the diffuser, allowing in that way to adjust the angle of the light beam provided by the luminaire, and also the surface on which the luminaire is projected. This reduces the direct glare caused by the lamp or the combination of them.

The great advantage of the system is that the user may select the reflector with the required angle, so that it may have a higher or loweramount of illumination, by selecting the opening angle to concentrate the illumination as much as possible in the space the user wants to illuminate with a luminaire, so that it might not result in a discomfort caused by direct glare, as this glare is reduced.

The device may be provided with hooking means inside its body so that it is located and fixed in its place, otherwise it maybe clamped by clips, screws or any other clamping device.

Preferably, the device will also be made of insulation material or of electrically conductive material provided with insulation cover.

### PREFERRED EMBODIMENT OF THE INVENTION

The reflector system of the present invention comprises at least a reflector (10), wherein each reflector (10) has a certain opening angle and variable length. The reflector (10) may be manufactured with different opening angles and length depending on the required amount of illumination, which allows according to these characteristics to reduce the Unified Glare Rating (UGR), since a reduction being directly proportional to the selected angle and length is achieved.

Preferably, the system comprises at least a reflector (10) preferably being parabolic, although theymay be in any other shape. Each reflector (10) may reduce the opening angle of the light emitted by the LEDs, so that the emitted light beams reach the luminaire diffuser at an angle as close as possible to the perpendicular. This results in that the light beam suffers less diffraction when passing through the diffuser material, thus obtaining a greater coincidence of the spectrum of the light emitted by the source with the light spectrum emitted by the luminaire, that is, that the standard deviationcolour matching is improved. The angle may be selected according to the user needs, thus reducing the opening angle of the light emitted by the luminaire, and the reduction of the Unified Glare Rating (UGR) of the luminaire is therefore achieved.

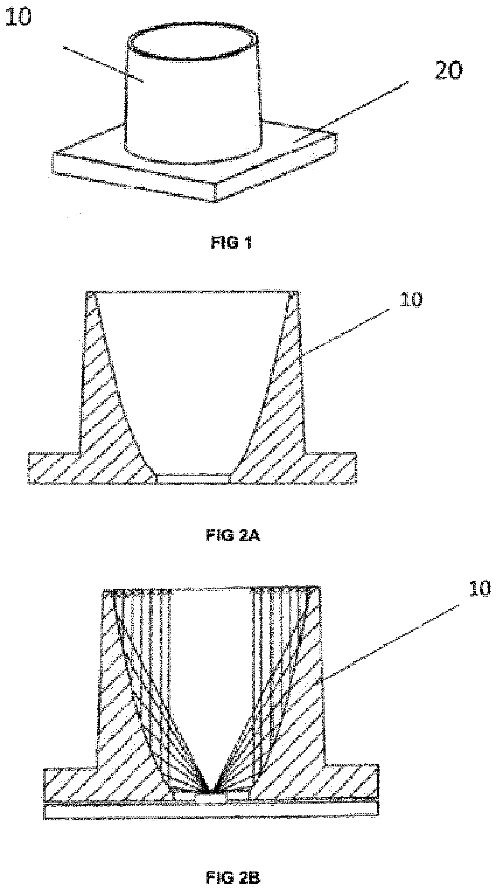

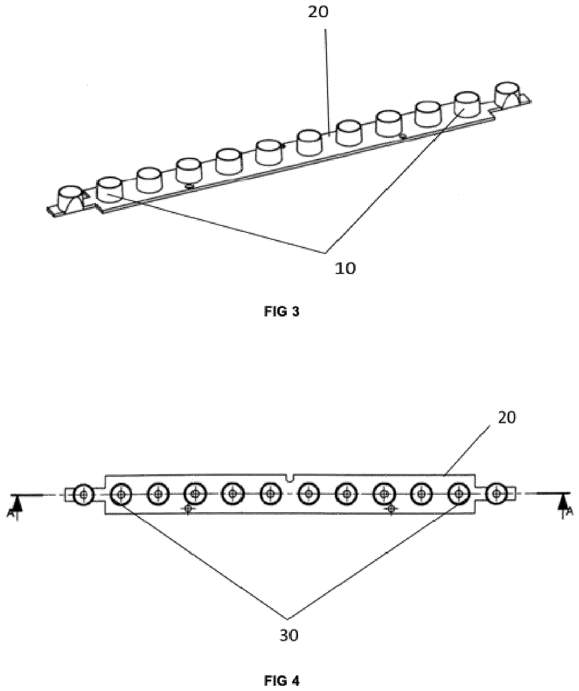

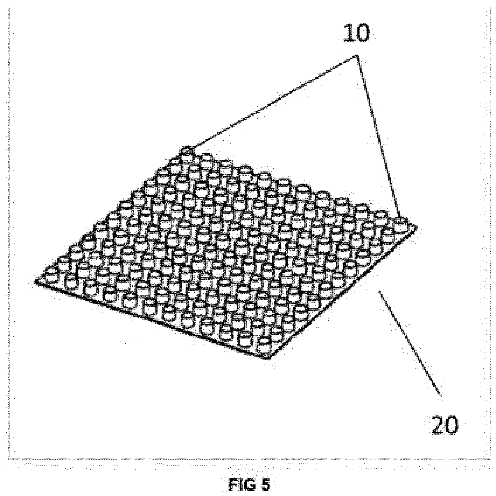

Each of the reflectors (10) may be inserted in a base (20) that may be a single piece attached to the reflector (10) or an independent piece, wherein each reflector (10) is fitted and clamped (FIG 1). The base (20) maybe a strip-shaped rectangular structure (FIG 3 and 4), wherein the reflectors (10) are inserted, or a flat piece (FIG 5) being essentially rectangular, square or similar, wherein the reflectors (10) are arranged on its entire surface.

The system comprises hooking and clamping means (30) that allow each reflector (10) to be inserted into the base (20), said hooking and clamping means (30) maybe part of a single piece attached to each reflector (10), or with the reflector (10) and base (20) assembly, or be independent pieces with which the reflector (10),or the reflector (10) and base (20) assembly, is hooked and clamped, or they may even be part of the lighting cover.

It is therefore useful to have an accessory as the one that constitutes the object of thisinvention, as it allows to reduce the UGR of the luminaire without requiring the replacement of the type of luminaire, the installation of a different screen to the luminaire or the replacement of the light source with a different one having a different opening angle, and without modifying the aspect or the outer appearance of the lamp, which has been necessary so far, as the lamps currently present on the market comprise fixed and compact structures that do not allow to easily modify said angle once they are manufactured.

On top of that, through the concentration of the emitted light beam, an increased energy efficiency is achieved, thereby obtaining a higher illuminance (amount of light striking a surface measured in "lux") with the same luminous flux (or amount of emitted light measured in "lumen").

## Claims

1. A reflector system for reducing the Unified Glare Rating from luminaires with LED technology, **characterized in that** it comprises at least one reflector (10), wherein said reflector (10) has a certain opening angle and variable length; a base (20) that may be a single piece attached to the reflector (10), or an independent piece, wherein each reflector (10) is fitted and clamped; and hooking and clamping means (30) that allow each reflector (10) to be inserted into the base (20).

2. The reflector system for reducing the Unified Glare Rating from luminaires with LED technology according to claim 1, **characterized in that** each reflector (10) is manufactured with a different opening angle and length depending on the required amount of illumination.

3. The reflector system for reducing the Unified Glare Rating from luminaires with LED technology according to claim 1, **characterized in that** the hooking and clamping means (30) are part of a single piece attached to each reflector (10).

4. The reflector system for reducing the Unified Glare Rating from luminaires with LED technology according to claim 1, **characterized in that** the hooking and clamping means (30) are part ofa single piece with the reflector (10) and base (20) assembly.

5. The reflector system for reducing the Unified Glare Rating from luminaires with LED technology according to claim 1, **characterized in that** the hooking and clamping means (30) are independent pieces with which the reflector (10), or the reflector (10) and base (20) assembly, is hooked and clamped.

6. The reflector system for reducing the Unified Glare Rating from luminaires with LED technology according to claim 1, **characterized in that** the base (20) is a strip-shaped rectangular structure, wherein the reflectors (10) are inserted.

7. The reflector system for reducing the Unified Glare Rating from luminaires with LED technology according to claim 1, **characterized in that** the base (20) is a flat piece being essentially rectangular, square or similar, wherein the reflectors (10) are arranged on its entire surface.
